# EUROPEAN PATENT APPLICATION

(11) **EP 2 275 935 A2**
(43) Date of publication of application: **19.01.2011**
(21) Application number: 10167925.6
(22) Date of filing: 30.06.2010
(51) Int. Cl.: G06F 11/36

(54) **Method for modifying an instruction sequence that is memorized in a read only memory (ROM) of a smart card and a corresponding smart card**

(30) Priority: 30.06.2009 IT MI20091161
(71) Applicant: Incard SA, 1204 Geneva (CH)
(72) Inventor: Di Sirio, Giovanni, 84100 Salerno (IT); Fontana, Giovanni, 80100 Napoli (IT)
(74) Representative: Botti, Mario

(57) **Abstract**

Method for modifying an instruction sequence (S), each instruction (i) being associated with an address (j) and stored in a read only memory (ROM) of a smart card (1), the smart card (1) further comprising a microprocessor (2) and at least one further non-volatile memory (6); the method comprises:
- a mapping step which provides identifying the addresses (j) associated with the instructions (i) to be modified included in said instruction sequence (S) and storing such identified addresses (bp_1,...,bp_n) in a breakpoint unit (10);
- an upgrading step for storing groups of alternative instructions (g_1,...,g_n) in the non-volatile memory (6) and for associating with each group of instructions (g_k with k=1,...,n) one of said identified addresses (bp_1, ...,bp_n);
- an updating step for comparing a current address (j) of a current instruction (i) of said instruction sequence (S) with said identified addresses (bp_1,...,bp_n) and, in the event that said current address (j) corresponds to one of said identified addresses (bp_1,...,bp_n), to enable an update by executing the group of alternative instructions (g_1,...,g_n) associated with said corresponding identified address (bp_1,...,bp_n); on the contrary, to execute said current instruction (i).

## Description

### Field of the invention

The present invention relates to a method for modifying an instruction sequence, each instruction being associated with an address and stored in a read only memory or ROM of a smart card, said smart card comprising a microprocessor and at least one further non-volatile memory.

The invention also relates to a smart card comprising an instruction sequence to be modified, each instruction being associated with an address and stored in a read only memory or ROM, said smart card further comprising a microprocessor and at least one further non-volatile memory.

### Background of the invention

As it is well known, smart cards, namely integrated circuit cards with a microprocessor and operating system, have in recent years found widespread uses in many different fields ranging from healthcare to telecommunications.

The range of possible uses for smart cards is thus extremely wide. In particular, smart cards can be used in electronic devices such as: PDAs (Personal Digital Assistants), credit cards, personal medical cards, in cellular telephones, in handheld devices but can also be used in personal computers equipped with a dedicated port, in anti-theft devices and in other similar devices.

Such electronic devices operate in accordance with programs or instruction sequences (software applications) which are, in particular, stored in a portion of the smart card's read only memory or ROM. There is sometimes a need in such instruction sequences to correct specific programming errors which prevent correct operation of the program. Furthermore, it is periodically necessary to update the stored instruction sequence to upgrade the functionality of the electronic device comprising the smart card.

A patching mechanism is currently used for this purpose which allows new instructions to be appended to the instruction sequences stored in the ROM. In particular, the patching mechanism is implemented by providing fixed control-points within the instruction sequences, these points being appropriately provided by the programmer and listed in a table stored in a programmable memory of the smart card.

This table makes it possible to associate a pointer with each fixed control-point, which pointer is conveniently modifiable and can, if necessary, be pointed to a new instruction sequence.

Accordingly, when it is desired to append new instructions to the instruction sequences, reference must be made to such previously provided fixed control-points. It can thus be said that the patching mechanism is currently managed at software level.

This means that, in order to correct even small portions of instructions in an instruction sequence stored in the ROM, it is necessary to replace all the instructions from the predetermined fixed control-point up to the defective instruction portion.

The programmer must therefore take particular care in positioning such fixed control-points within the instruction sequences, whose goodness of positioning can only be verified during the updating step of the instruction sequence.

A further drawback is a slowdown due to the continual controls, which must be provided to verify the presence of the fixed control-points. This slowdown is particularly noticeable when the fixed control-points are inserted within a repeating program loop, such as a "for" loop, this being because the instruction portion containing the fixed control-points is cyclically recalled and repeated.

Apart from the slow-down due to execution of verification, the controls provided for verifying the presence of the fixed control-points also involve a waste of space in the ROM during such controls.

In the context of smart card applications, the slowdown is sometimes critical due to the limited memory space from which smart cards are known to suffer.

The technical problem underlying the present invention is that of provide a method for modifying an instruction sequence stored in a read only memory (ROM) of a smart card which has variable access points which are programmable in accordance with needs and having such structural and functional characteristics as to ensure to overcome the limits and the drawbacks still affecting methods and smart cards realised according to the prior art.

### Summary of the invention

The solution idea underlying the present invention is that of providing, conveniently programmable, mapping of the addresses associated with the instructions to be modified.

On the basis of this solution idea the technical problem is solved by a method for modifying an instruction sequence, each instruction being associated with an address and stored in a read only memory (ROM) of a smart card, said smart card further comprising a microprocessor and at least one further non-volatile memory, the method being **characterised in that** it comprises:
- a mapping step which provides identifying the addresses associated with the instructions to be modified included in said instruction sequence and storing such identified addresses in a breakpoint unit;
- an upgrading step for storing groups of alternative instructions in said non-volatile memory and for associating with each group of instructions one of said identified addresses;
- an updating step for comparing a current address of a current instruction of said instruction sequence with said identified addresses and, in the event that said current address corresponds to one of said identified addresses, to enable a update by executing the group of alternative instructions associated with said corresponding identified address; on the contrary, to execute said current instruction.

Advantageously, using the breakpoint unit as a hardware element makes it possible to simplify the method and to make modifying the instruction sequence conveniently programmable.

Advantageously, according to one aspect of the invention, the breakpoint unit is made to comprise at least one set of address registers capable of containing one of the identified addresses and furthermore of comprising an interrupt generation logic associated with the set of address registers.

Conveniently, the breakpoint unit is made also to comprise at least one further control and/or status register and at least one interconnection logic.

Advantageously, according to one aspect of the invention, updating comprises a coming back step being suitable to provide a jump of a number of instructions in said instruction sequence, said number being defined by said group of alternative instructions being executed. Conveniently, according to another aspect of the invention, said updating comprises a recall step which temporarily copies said group of alternative instructions associated with said address register corresponding to said current address into a portion of volatile memory of said smart card.

The technical problem is also solved by a smart card comprising an instruction sequence to be modified, each instruction being associated with an address and stored in a read only memory (ROM), said smart card further comprising a microprocessor and at least one further non-volatile memory and being **characterised in that** it comprises at least one breakpoint unit comprising identified addresses which correspond to addresses of instructions to be modified that are included in said instruction sequence, said non-volatile memory comprising groups of alternative instructions correspondingly associated with said identified addresses for executing alternative instructions in substitution of said instructions to be modified.

Advantageously, according to one aspect of the present invention, said breakpoint unit has at least one set of address registers which comprises said identified addresses, an address comparison logic and an interrupt generation logic associated with said set of address registers.

Conveniently, the breakpoint unit comprises at least one further control and/or status register and at least one interconnection logic. Advantageously, the smart card comprises a portion of volatile memory having a temporary copy of one of said groups of alternative instructions associated with one of said address registers.

The features and advantages of the method and smart card according to the invention will be apparent from the following description of an embodiment thereof, given by way of non-limitative example with reference to the attached drawings.

### Brief description of the drawings

In the drawings:
- Figure 1 is a schematic diagram of a first exemplary embodiment of the method according to the present invention;
- Figure 2 is a schematic diagram of a second exemplary embodiment of the method according to the present invention.

### Detailed description

With reference to said figures, with S is globally indicated an instruction sequence, each instruction i being associated with a corresponding address j and stored in a read only memory 5 or ROM contained in a smart card 1, the latter being shown schematically in the figures.

The smart card 1 further and essentially comprises a microprocessor 2, equipped with an operating system or Central Processing Unit (CPU), and at least one non-volatile memory 6, for example an EEPROM, OTP, flash or similar memory.

According to one aspect of the present invention, the smart card 1 furthermore comprises a breakpoint unit 10 makes to comprise a set 7 of registers, an address comparison logic 9 and a logic 8 for generating the interrupts associated with the set 7 of address registers bp_k.

Still more specifically, the set 7 of registers comprises one or more address registers bp_k, the number k of address registers bp_k being dependent on the architecture of the smart card 1, in the present example 1≤k≤n.

According to the present invention, the method for modifying the instructions i, that are included in the instruction sequence S, comprises a mapping step, which provides identifying the addresses k associated with the instructions i to be modified that are included in the instruction sequence S and storing each identified address j in a corresponding register bp_k of the set 7 of registers. Conveniently, the identified addresses j stored in the set 7 of registers are identified by the programmer him/herself or by a provided automatic procedure.

The method according to the present invention thus provides an upgrading step suitable to storing groups of alternative instructions g_1,...,g_n in the non-volatile memory 6 of the smart card 1 and to associating a corresponding register bp_k of the set 7 of registers with each group of alternative instructions g_k.

The method advantageously provides, during execution of the instruction sequence S stored in the ROM, an updating step suitable to comparing a current address j of a current instruction i of said instruction sequence S with the identified addresses stored in the set 7 of address registers bp_k. The updating step can proceed by using the address comparison logic 9 that are included in the breakpoint unit 10. In the event that the current address j corresponds to one of said registers bp_k, the updating step enables updating step and executes the additional instructions of the group of alternative instructions g_k associated with the corresponding identified register bp_k. However, on the contrary, if the current address j is not included in the set 7 of registers of the breakpoint unit 10, the current instruction i is executed. In particular, during the updating step, the address comparison logic 9 sequentially compares the entire sequence S of instructions i by means of the microprocessor 2, advantageously by comparing only the address j of the instructions i of the sequence S and so avoiding controlling the content of the instruction i itself.

According to another aspect of the present invention, the interrupt generation logic 8, activated by the address comparison logic 9, in turn activates one or more service routines in order to execute the instructions included in the group of alternative instructions g_k associated with the register bp_k corresponding to the current address k.

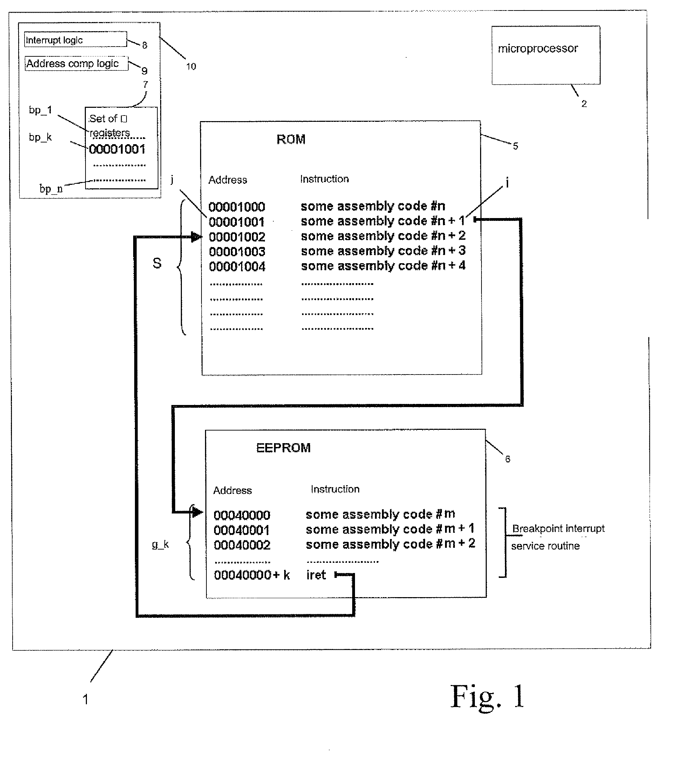

According to one aspect of the present invention, the instruction updating step comprises a coming back step suitable to restore the execution of the instructions i included in the instruction sequence S. In particular, the coming back step can provide a jump of a number p of instructions i in the sequence S, said number p being defined by the alternative instructions of the group of instructions g_k being executed. As shown in the example of Figure 1, during execution of the instructions of the instruction sequence S stored in the ROM memory 5, the updating step, in particular the address comparison logic 9, makes a comparison between the current address j of the current instruction i and the addresses k that are included in the address registers bp_k of the set 7 of registers. In the present example, the current address j, "0001001", corresponds to the address register bp_k and the interrupt generation logic 8 thus interrupts the microprocessor and activates the corresponding service routine. Accordingly, the instructions executed are those included in the group of instructions g_k associated with the identified register bp_k, so actually modifying the instruction sequence S.

In the example shown, the group of alternative instructions g_k is, in particular, stored in the EEPROM non-volatile memory 6 and comprises updating and/or upgrading of the current instruction i associated with the current address j.

Updating thus provides the coming back step, which is defined by the latest instruction of the group of instructions g_k and, in the present example, coming back is made at the following address j+1 relative to the current address j, namely "0001002". In this case, the number p of jumped instructions of the instruction sequence S is equal to 1.

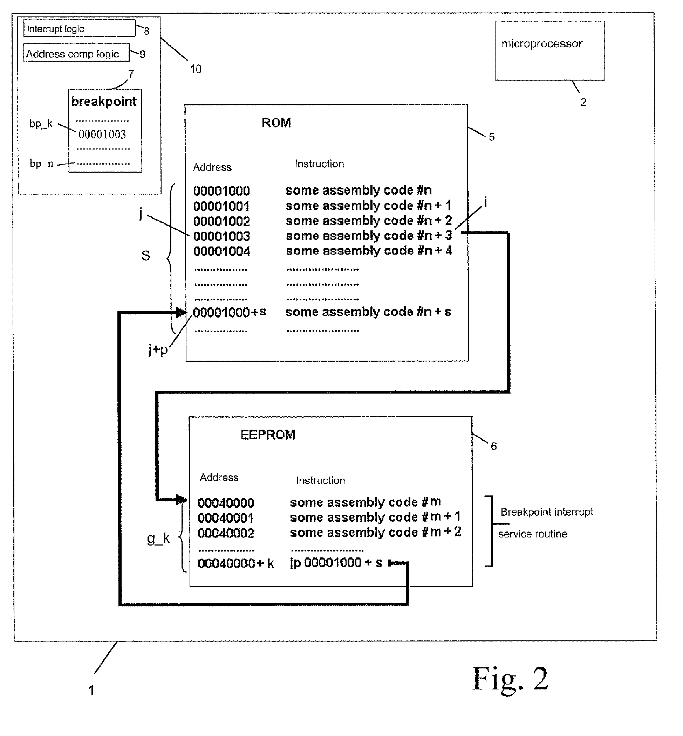

The example of Figure 2 shows an updating step in which the current address j of the current instruction i, in particular address "00001003", corresponds to the register bp_k present in the set 7 of registers. According to the method of the present invention, thanks to the service routine activated by the interrupt generation logic 8, the microprocessor 2 thus, during the updating step, executes the group of alternative instructions g_k associated with identified register bp_k.

In the present example, the group of alternative instructions g_k comprises replacement of a block p of instructions of the instruction sequence S, necessary for example in the case of resolving a specific programming error which prevents correct functioning of the program or stream of instructions S.

This updating accordingly comprises the coming back step, defined by the latest instruction of the group of alternative instructions g_k, which provides a jump of a number p of instructions in the instruction sequence S for coming back at address j+p, namely "0001003+s", relative to the current address j. In such a case, the number p of instructions which define the jump is equal to s-3.

According to another aspect of the method of the present invention, updating of the instructions comprises a recall step, which can conveniently be activated as required.

In particular, the recall step temporarily copies the group of instructions g_k associated with the address register bp_k included in the set 7 of registers and which corresponds to the current address j of the current instruction i to be modified into a portion of the volatile memory of the smart card 1, for example into a RAM memory, not shown in the figures.

According to said aspect, each group of instructions g_k can be executed rapidly so improving the performance of the smart card 1.

Essentially, thanks to method according to the present invention, the microprocessor 2 which executes the instruction sequence S is thus automatically interrupted at the addresses included in the set 7 of address registers and the instructions executed are the alternative instructions stored in the non-volatile memory 6 of the smart card 1 associated with the address register bp_k corresponding to the current address j.

According to the present invention, the breakpoint unit 10 can be made using various architectures and, in particular, can be implemented internally or externally to the microprocessor 2 of the smart card 1 and the number of registers bp_k comprise in the set 7 of registers corresponds to the number of hardware registers available in the microprocessor 2.

Furthermore, the smart card 2 can be made also to comprise one or more control registers and one or more status registers which make it possible to control the operations of the microprocessor 2 and the execution of commands, and at least one interconnection logic or glue logic to interface complex logic circuits with one another.

According to a further aspect of the present invention, a service routine can be associated with a specific address register bp_k or a single service routine is associated with all the address registers bp_k included in the set 7 of registers. In this latter case, determining which address register bp_k is to be used is the responsibility of the interrupt generation logic 8.

Operationally, according to the method of the present invention, the breakpoint unit 10 and in particular the set 7 of address registers thus carries out mapping which comprises the addresses k of the instructions i to be modified. Thanks to said mapping, the address comparison logic 9 interrupts normal execution of the instruction sequence S by the microprocessor 2 at such predefined addresses, the microprocessor 2 being triggered and activating the service routine associated with the identified address register bp_k. The instructions executed are thus those included in the corresponding group of alternative instructions g_k associated with the address register bp_k. Conveniently, therefore, such addresses are not fixed or predetermined at the design step, but can be modified and programmed at any time on the basis of the alternative instructions to be appended to the instruction sequence S stored in the ROM 5. Advantageously, this makes it possible to provide a considerable degree of freedom.

The present invention also relates to a smart card 1 comprising a sequence S of instructions i to be modified according to the previously described method for which details and cooperating parts having the same structure and function will be denoted with the same reference numbers and letters.

Each instruction i of the sequence S of instructions is associated with an address j and stored in a read only memory (ROM) 5.

The smart card 1 furthermore comprises a microprocessor 2 and at least one non-volatile memory 6, for example an EEPROM, OTP, flash or similar memory types.

According to one aspect of the present invention, the smart card 1 furthermore comprises a breakpoint unit 10 comprising a set 7 of address registers, an address comparison logic 9 and a logic 8 for generating the interrupts associated with the set 7 of address registers bp_k.

According to one aspect of the present invention, the set 7 of registers comprises one or more address registers bp_k, where the number k of address registers with 1≤k≤n depends on the architecture of the smart card 1.

Each register bp_k of the set 7 of registers comprises an address j, for 1≤j≤s, of corresponding instructions i to be modified included in the instruction sequence S.

On the contrary, the non-volatile memory 6 comprises groups g_1,...,g_n of alternative instructions, each group g_k being associated with a register bp_k present in the set 7 of registers of the breakpoint unit 10.

In particular, according to one aspect of the present invention, if a current address j, for 1≤j≤s, of a current instruction i of the instruction sequence S corresponds to the content of a register bp_k of the breakpoint unit 10, the group of instructions g_k associated with the corresponding register bp_k is executed in place of the current instruction i.

According to a further aspect of the present invention, the interrupt generation logic 8 comprises one or more service routines relating to a corresponding register bp_k of the set 7 of registers. Such service routines are activated to execute the instructions included in the group of alternative instructions g_k associated with the corresponding register bp_k which is in turn associated with the corresponding current address j.

With regard to the functioning of the smart card 1, according to the present invention, the microprocessor 2 executes the instruction sequence S and is automatically interrupted by the address comparison logic 9 at the addresses included in the corresponding registers bp_k. By activating the service routine, the interrupt generation logic 8 carries out the instructions included in the corresponding group of alternative instructions g_k associated with corresponding address register bp_k to be executed.

According to the present invention, the breakpoint unit 10 can comprise different architectures and can be implemented internally or externally to the microprocessor 2 of the smart card 1.

The breakpoint unit 10 may also comprise one or more control registers and one or more status registers for controlling the operations of the microprocessor 2 and the execution of commands, and at least one interconnection logic or glue logic to interface complex logic circuits with one another.

According to one aspect of the present invention, the smart card 1 can comprise a portion of volatile memory or RAM, not shown in the figures, comprising a temporary copy of the group of instructions g_k associated with the address register bp_k corresponding to the current address j. Advantageously, in such a case, the instructions of the corresponding group of instructions g_k, being stored in the volatile memory or RAM portion of the smart card 1, can be executed rapidly, so improving the performance of the smart card 1. Furthermore, in such a case, said portion of RAM is occupied only temporarily so making it possible, once the instructions have been executed, to use said portion of RAM for other functions, to the benefit of the performance of said smart card 1. In conclusion, the modifying method according to the invention is reliable and versatile, making use of a hardware element, such as in particular the breakpoint unit, for storing in programmable mode the addresses of the instructions to be modified.

Advantageously, the method and smart card according to the present invention allow maximum freedom in selecting interrupt points in the instruction sequence stored in the ROM, the addresses of which simply have to be stored in the set of address registers of the breakpoint unit. A further advantage of the present invention is provided by the mapping of the instruction sequence thanks to the set of address registers, said mapping advantageously being programmable. Said mapping makes it possible, during subsequent releases, quickly and reliably to update and/or add to the instructions of the sequence, substantially improving the performance of the smart card.

Another considerable advantage is provided by the freedom, which the present invention allows to the programmer, who no longer has to worry about planning and inserting fixed control-points within the instruction sequence.

Another considerable advantage of the present invention is provided by its versatility which allows it to be used irrespective of the programming language in which the instructions of the instruction sequence are written and of the operating code of the CPU, because the modifying method simply carries out a comparison of the addresses of the instruction sequence and not the content of the instruction.

A further advantage of the method according to the present invention is associated with the reduced memory space occupied during execution of the alternative instructions which makes it possible to accelerate said execution.

## Claims

1. A method for modifying an instruction sequence (S), each instruction (i) being associated with an address (j) and stored in a read only memory (ROM) of a smart card (1), said smart card (1) further comprising a microprocessor (2) and at least one further non-volatile memory (6), the method being **characterised in that** it comprises:
- a mapping step which provides identifying the addresses (j) associated with the instructions (i) to be modified that are included in said instruction sequence (S) and storing such identified addresses (bp_1,...,bp_n) in a breakpoint unit (10);
- an upgrading step for storing groups of alternative instructions (g_1,...,g_n) in said non-volatile memory (6) and for associating with each group of instructions (g_k with k=1,...,n) one of said identified addresses (bp_1, ...,bp_n);
- an updating step for comparing a current address (j) of a current instruction (i) of said instruction sequence (S) with said identified addresses (bp_1,...,bp_n) and, in the event that said current address (j) corresponds to one of said identified addresses (bp_1,...,bp_n), to enable an update by executing the group of alternative instructions (g_1,...,g_n) associated with said corresponding identified address (bp_1,...,bp_n); on the contrary, to execute said current instruction (i).

2. A method according to claim 1, **characterised by** making said breakpoint unit (10) to comprise at least one set (7) of address registers, each register being capable of containing one of said identified addresses (bp_1,...,bp_n), said breakpoint unit (10) further comprising an address comparison logic (9) and an interrupt generation logic (8) associated with said set (7) of address registers.

3. A method according to claim 2, **characterised by** making said breakpoint unit (10) to comprise at least one further control and/or status register and at least one interconnection logic.

4. A method according to claim 2, **characterised in that** said updating comprises a coming back step for providing a jump of a number (p) of instructions in said instruction sequence (S), said number (p) being defined by said group of alternative instructions (g_1,...,g_n).

5. A method according to claim 4, **characterised in that** said updating comprises a recall step which temporarily copies said group of alternative instructions (g_1,...,g_n) associated with said address register (bp_1,...,bp_n) corresponding to said current address (j) into a portion of volatile memory (RAM) of said smart card (1).

6. A smart card comprising an instruction sequence (S) to be modified, each instruction (i) being associated with an address (j) and stored in a read only memory (ROM), said smart card (1) further comprising a microprocessor (2) and at least one further non-volatile memory (6), **characterised in that** it comprises at least one breakpoint unit (10) comprising identified addresses (bp_1,...,bp_n) which correspond to addresses (j) of instructions (i) to be modified that are included in said instruction sequence (S), said non-volatile memory (6) comprising groups of alternative instructions (g_1,...,g_n) correspondingly associated with said identified addresses (bp_1,...,bp_n) for executing alternative instructions instead of said instructions (i) to be modified.

7. A smart card according to claim 6, **characterised in that** said breakpoint unit (10) has at least one set (7) of address registers, each register comprising one of said identified addresses (bp_1,...,bp_n), an address comparison logic (9) and an interrupt generation logic (8) associated with said set (7) of address registers.

8. A smart card according to claim 7, **characterised in that** said breakpoint unit (10) comprises at least one further control and/or status register and at least one interconnection logic.

9. A smart card according to claim 8, **characterised in that** it comprises a portion of volatile memory (RAM) having a temporary copy of one of said group of alternative instructions (g_1,...,g_n) associated with one of address registers (bp_1,...,bp_n).

10. An electronic device comprising a smart card according to claims 6 to 9.
